# EUROPEAN PATENT APPLICATION

(11) **EP 2 851 059 A1**
(43) Date of publication of application: **25.03.2015**
(21) Application number: 12876642.5
(22) Date of filing: 14.05.2012
(51) Int. Cl.: A61J 3/00

(54) **MEDICINAL AGENT FILLING DEVICE**

(71) Applicant: Takazono Technology Incorporated, Osaka 573-0128 (JP)
(72) Inventor: NISHIBUE, Masayoshi, Hirakata-shi Osaka 573-0128 (JP)
(74) Representative: Grünecker, Kinkeldey, Stockmair & Schwanhäusser
(86) International application number: PCT/JP2012/062280
(87) International publication number: WO 2013/171821

(57) **Abstract**

There is provided a medicinal agent filling device that allows reduction of the operator's time and effort when the operator fills a medicinal agent into a container. A medicinal agent filling device (1) includes: a supply device (10) for supplying a medicinal agent of interest to a container (26) capable of being filled with the medicinal agent; a holding body (20) having a plurality of holding sections, each of which can hold the container (26); a conveyance device (30) for conveying the holding body (20) and moving the holding body (20) to a supply position at which the medicinal agent can be supplied from the supply device (10) to the container (26) held by any one of the plurality of holding sections; and a detecting unit for detecting the holding body (20) located on an immediately upstream side of the supply position.

## Description

### TECHNICAL FIELD

The present invention relates to a medicinal agent filling device, and particularly to a medicinal agent filling device for filling a medicinal agent into a container.

### BACKGROUND ART

With regard to a device for filling a medicinal agent into a container, there has been conventionally proposed a medicinal agent feeder including: a tablet case made of resin and having a discharge drum for discharging a medicinal agent from a housing container for the medicinal agent; and a chute made of resin, for directly receiving the medicinal agent discharged from the tablet case and guiding the medicinal agent toward the front side (refer to, for example, Japanese Patent Laying-Open No. 2002-291845 (PTD 1)).

### CITATION LIST

### PATENT DOCUMENT

PTD 1: Japanese Patent Laying-Open No. 2002-291845

### SUMMARY OF INVENTION

### TECHNICAL PROBLEM

According to the medicinal agent feeder described in Japanese Patent Laying-Open No. 2002-291845 (PTD 1), an operator needs to manually bring the container to underneath a chute outlet one by one when filling the medicinal agent into the container, which required time and effort.

The present invention has been made in light of the aforementioned problem, and a main object of the present invention is to provide a medicinal agent filling device that allows reduction of the operator's time and effort when the operator fills a medicinal agent into a container.

### SOLUTION TO PROBLEM

A medicinal agent filling device according to the present invention includes: a supply device; a holding body; a conveyance device; and a detecting unit. The supply device supplies a medicinal agent of interest to a container capable of being filled with the medicinal agent. The holding body has a plurality of holding sections, each of which can hold the container. The conveyance device conveys the holding body. The conveyance device moves the holding body to a supply position at which the medicinal agent can be supplied from the supply device to the container held by any one of the plurality of holding sections. The detecting unit detects the holding body located on an immediately upstream side of the supply position.

In the medicinal agent filling device, the holding body may have a plurality of detected portions corresponding to the plurality of holding sections, respectively, and the detecting unit may detect the detected portion of the holding section located on the immediately upstream side of the supply position.

The medicinal agent filling device may include a container detecting unit for detecting that the container is held by the holding section.

The medicinal agent filling device may further include a control unit for controlling the supply device and the conveyance device, wherein the control unit may receive a result of detection by the detecting unit indicating that the holding body is located on the immediately upstream side of the supply position, and control the conveyance device to stop the holding body at the supply position.

The medicinal agent filling device may include a container detecting unit for detecting that the container is held by the holding section, wherein when the holding body is staying at the supply position, the control unit may receive a result of detection by the container detecting unit indicating that the container is held by the holding section, and control the supply device to supply the medicinal agent from the supply device to the container.

In the medicinal agent filling device, when supply of the medicinal agent from the supply device to the container is completed, the control unit may restart conveyance of the holding body by the conveyance device.

In the medicinal agent filling device, the conveyance device may have a belt, and the holding body may be placed on the belt and conveyed.

### ADVANTAGEOUS EFFECTS OF INVENTION

According to the medicinal agent filling device of the present invention, the operator's time and effort can be reduced because the holding body holding the container capable of being filled with the medicinal agent can be conveyed and the medicinal agent can be automatically supplied from the supply device to the container.

### BRIEF DESCRIPTION OF DRAWINGS

Fig. 1 is a side view showing a schematic configuration of a medicinal agent filling device according to the present embodiment.
Fig. 2 is an enlarged view of a holding body shown in Fig. 1.
Fig. 3 is a schematic view showing arrangement of detecting units with respect to a conveyance device.
Fig. 4 is a schematic view showing arrangement of detecting units with respect to the holding body and a container.
Fig. 5 is a block diagram showing a schematic configuration related to control of the medicinal agent filling device.
Fig. 6 is a flowchart showing the operation for supplying a medicinal agent from a supply device to the container.
Fig. 7 is a partial cross-sectional view showing a state in which the holding body is located on the immediately upstream side of a first supply position.
Fig. 8 is a partial cross-sectional view showing a state in which the holding body is located at the first supply position.
Fig. 9 is a partial cross-sectional view showing a state in which the holding body is located on the immediately upstream side of a second supply position.
Fig. 10 is a partial cross-sectional view showing a state in which the holding body is located at the second supply position.
Fig. 11 is a partial cross-sectional view showing a state in which the holding body is located on the immediately upstream side of a third supply position.
Fig. 12 is a partial cross-sectional view showing a state in which the holding body is located at the third supply position.
Fig. 13 is a graph showing relation between the position of the holding body and the conveyance speed.

### DESCRIPTION OF EMBODIMENTS

An embodiment of the present invention will be described hereinafter with reference to the drawings, in which the same or corresponding portions are denoted by the same reference numerals and description thereof will not be repeated.

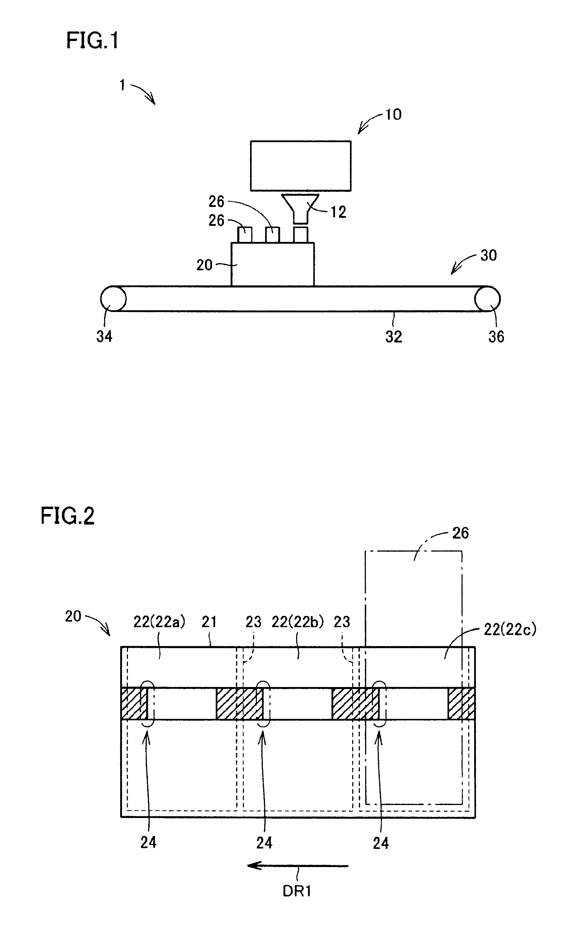

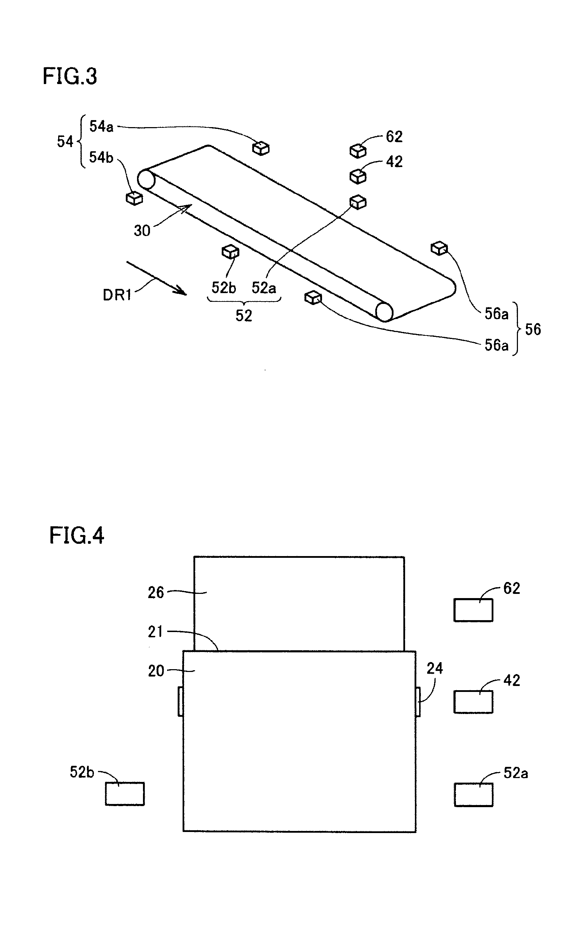

Fig. 1 is a side view showing a schematic configuration of a medicinal agent filling device 1 according to the present embodiment. Fig. 2 is an enlarged view of a holding body 20 shown in Fig. 1. Fig. 3 is a schematic view showing arrangement of detecting units with respect to a conveyance device 30. Fig. 4 is a schematic view showing arrangement of detecting units with respect to holding body 20 and a container 26. First, the schematic configuration of medicinal agent filling device 1 will be described with reference to Figs. 1 to 4.

Medicinal agent filling device 1 is a device for automating a work for filling, into container 26, a solid medicinal agent such as a tablet or a capsule, or a medicinal agent packaged individually according to dosage unit. Medicinal agent filling device 1 includes a supply device 10 for supplying the medicinal agent of interest to container 26, and conveyance device 30 for conveying holding body 20 that holds container 26. Considering the convenience during delivery, container 26 has a rectangular box-like shape that is relatively small in thickness. As long as the medicinal agent of interest can be filled into container 26, the shape of container 26 is not limited to the box-like shape. For example, container 26 may be a substantially cylindrical vial bottle, or container 26 having another arbitrary shape may be used.

Supply device 10 has medicinal agent cassettes that house various types of medicinal agents according to type. The medicinal agent cassette is provided in supply device 10 in a freely attachable/detachable manner. Supply device 10 may be a device that can simultaneously hold a plurality of medicinal agent cassettes such as, for example, 128 or 256 medicinal agent cassettes. In this case, a plurality of medicinal agents can be easily dispensed from supply device 10 according to type, and thus, in accordance with a prescription including a plurality of medicinal agents, the dispense of the medicinal agents can be completed in a short time. Alternatively, supply device 10 may be configured such that supply device 10 can hold one medicinal agent cassette and the user using the device replaces a necessary medicinal agent cassette as the need arises. In this case, supply device 10 can be reduced in size, and thus, cost reduction and space savings of supply device 10 can be achieved.

A discharge port from which the medicinal agent is discharged is provided on the bottom of supply device 10, and a hopper 12 is arranged at a position facing this discharge port. The medicinal agent dispensed from the medicinal agent cassette is discharged from the discharge port, passes through hopper 12 provided below supply device 10 and further falls, and is supplied to container 26.

Conveyance device 30 conveys holding body 20, and thereby, container 26 moves under supply device 10. On the upper side of each container 26, an upper opening that causes the inside and the outside of container 26 to communicate with each other is formed. With container 26 being arranged at an appropriate position where the upper opening of container 26 faces hopper 12, the medicinal agent falls from supply device 10, passes through hopper 12 and is filled into container 26. The medicinal agent falling from supply device 10 passes through the upper opening and enters into container 26, and is received by container 26. The medicinal agent is supplied from supply device 10 to container 26, and thus, an appropriate quantity of medicinal agent is filled into container 26.

Holding body 20 has a plurality of holding sections 22, each of which can hold container 26. One holding section 22 holds one container 26, and holding body 20 having the plurality of holding sections 22 holds a plurality of containers 26 as a whole. The plurality of containers 26 are arranged in the movement direction of holding body 20 conveyed by conveyance device 30, and are held by holding body 20. The plurality of holding sections 22 are formed to be arranged in the movement direction of holding body 20.

As for holding body 20 shown in Fig. 2, the interior space of holding body 20 is divided into three sections by partition walls 23, and each of the three sections is provided to be capable of housing container 26. As a result, holding body 20 is provided with three holding sections 22a, 22b and 22c. Each of holding sections 22a, 22b and 22c is provided with an opening on the ceiling portion 21 side of holding body 20. Container 26 extends from the inside of holding body 20 through the opening to the outside above holding body 20. An upper end of container 26 is arranged outside holding body 20.

A strip-like portion extending along a conveyance direction DR1 of holding body 20 by conveyance device 30 is provided on an outer wall surface of a side portion of holding body 20. The strip-like portion has, alternately in conveyance direction DR1, a light color portion that is relatively light in color and a dark color portion that is relatively dark in color. The dark color portion is provided on the downstream side in conveyance direction DR1 with respect to holding section 22. An end of the dark color portion on the upstream side in conveyance direction DR1 is provided on the downstream side in conveyance direction DR1 with respect to a center line of holding section 22 in conveyance direction DR1. An end of the dark color portion on the upstream side in conveyance direction DR1 has a function as a detected portion 24 detected by a holding body position detecting unit 42 described below.

A plurality of detected portions 24 are continuously provided, with a prescribed spacing therebetween in conveyance direction DR1 of holding body 20. The spacing between adjacent detected portions 24 in conveyance direction DR1 is typically substantially the same as the dimension of holding section 22 in conveyance direction DR1. Detected portion 24 is not limited to such a configuration that detected portion 24 is formed in accordance with the color density of the strip-like portion. Detected portion 24 may have any configurations as long as it can detect the position of holding body 20 in conveyance direction DR1.

Conveyance device 30 moves container 26 held by holding section 22 of holding body 20 to a position at which the medicinal agent can be supplied from supply device 10 to container 26. When holding body 20 holds a plurality of containers 26, conveyance device 30 sequentially moves the plurality of containers 26 to the position at which the medicinal agent can be supplied from supply device 10, and temporarily stops holding body 20 at this position to supply the medicinal agent to container 26.

Conveyance device 30 shown in Figs. 1 and 3 is a known belt conveyor having a belt 32 and a pair of pulleys 34 and 36. Holding body 20 is placed on the upper side of belt 32. By movement of belt 32 with rotational motion of pulleys 34 and 36, holding body 20 is conveyed in conveyance direction DR1. Conveyance device 30 in the present embodiment conveys holding body 20 in conveyance direction DR1. Conveyance direction DR1 is the direction from one to the other of the pair of pulleys 34 and 36 provided at opposing ends of belt 32, e.g., the direction from pulley 34 to pulley 36.

Conveyance device 30 may be capable of conveying holding body 20 in both directions. Namely, in addition to conveyance direction DR1 described above, conveyance device 30 may also be capable of conveying holding body 20 in the direction from the other to one of the pair of pulleys 34 and 36, which is opposite to conveyance direction DR1, e.g., the direction from pulley 36 to pulley 34. The conveyance direction of holding body 20 by conveyance device 30 is configured to be switchable, and thus, the user using medicinal agent filling device 1 can select any one of the directions as conveyance direction DR1. As a result, in accordance with the situation of actual placement of medicinal agent filling device 1, holding body 20 can be conveyed in more appropriate direction to fill the medicinal agent into container 26.

Conveyance device 30 is not limited to the belt conveyor. Conveyance device 30 may have any configurations as long as it can convey holding body 20 in conveyance direction DR1. For example, conveyance device 30 may be configured such that a robot arm capable of making fine adjustments of the position in conveyance direction DR1 is included and this robot arm holds holding body 20 and moves holding body 20 in conveyance direction DR1.

As shown in Fig. 3, medicinal agent filling device 1 includes three sets of holding body detecting units, i.e., an upstream side holding body detecting unit 54, a central holding body detecting unit 52 and a downstream side holding body detecting unit 56. Upstream side holding body detecting unit 54, central holding body detecting unit 52 and downstream side holding body detecting unit 56 are arranged in this order in conveyance direction DR1. Upstream side holding body detecting unit 54 is provided on the upstream side in conveyance direction DR1 with respect to central holding body detecting unit 52. Downstream side holding body detecting unit 56 is provided on the downstream side in conveyance direction DR1 with respect to central holding body detecting unit 52.

When any one of containers 26 held by holding body 20 faces hopper 12 and is located at the position where the medicinal agent can be supplied from supply device 10 to any one of containers 26, central holding body detecting unit 52 detects holding body 20. Upstream side holding body detecting unit 54 detects holding body 20 located at a conveyance start position where conveyance device 30 starts conveyance of holding body 20. Downstream side holding body detecting unit 56 detects holding body 20 located at a conveyance end position where conveyance device 30 stops holding body 20 and ends conveyance of holding body 20.

Central holding body detecting unit 52 is a transmissive light sensor having a light emitting portion 52a and a light receiving portion 52b. Upstream side holding body detecting unit 54 is a transmissive light sensor having a light emitting portion 54a and a light receiving portion 54b. Downstream side holding body detecting unit 56 is a transmissive light sensor having a light emitting portion 56a and a light receiving portion 56b. The light generated by light emitting portions 52a, 54a and 56a is received by light receiving portions 52b, 54b and 56b, respectively. As shown in Fig. 4, each of light emitting portion 52a and light receiving portion 52b is arranged at a position facing the bottom side of a side surface portion of holding body 20 in the perpendicular direction (vertical direction in Fig. 4). The other light emitting portions 54a and 56a and light receiving portions 54b and 56b are also arranged at the same positions as the positions of light emitting portion 52a and light receiving portion 52b shown in Fig. 4 in the perpendicular direction.

The fact that the light generated by light emitting portions 52a, 54a and 56a is received by corresponding light receiving portions 52b, 54b and 56b means that holding body 20 is not present at the position where each holding body detecting unit is provided. The fact that the light generated by any one of light emitting portions 52a, 54a and 56a is not received by corresponding light receiving portions 52b, 54b and 56b means that the light is blocked by holding body 20. Namely, holding body 20 is present at the position where the holding body detecting unit having the light receiving portion that does not receive the light is provided. Holding body 20 is detected by any one of upstream side holding body detecting unit 54, central holding body detecting unit 52 and downstream side holding body detecting unit 56, and thereby, the current position of holding body 20 in conveyance direction DR1 is detected.

As shown in Figs. 3 and 4, medicinal agent filling device 1 includes holding body position detecting unit 42 serving as a detecting unit, for detecting detected portion 24 provided at holding body 20. Holding body position detecting unit 42 is a reflective-type light sensor that irradiates the aforementioned strip-like portion of holding body 20 with the light and detects the light reflected from the strip-like portion. Since the strip-like portion has the light color portion and the dark color portion, and reflection of the light from the light color portion is different from reflection of the light from the dark color portion, holding body position detecting unit 42 can detect which of the light color portion and the dark color portion is being irradiated with the light at the present moment. The end of the dark color portion forming a boundary from the dark color portion to the light color portion functions as detected portion 24, and holding body position detecting unit 42 detects a change from the light reflected from the dark color portion to the light reflected from the light color portion, thereby detecting detected portion 24.

When detected portion 24 is detected by holding body position detecting unit 42, holding body 20 is present on the immediately upstream side, in conveyance direction DR1, of the position at which the medicinal agent can be supplied from supply device 10 to container 26 to be held by holding section 22 corresponding to detected portion 24 thus detected.

Medicinal agent filling device 1 also includes a container detecting unit 62 for detecting that container 26 is held by holding section 22 of holding body 20. Container detecting unit 62 is a reflective-type light sensor that irradiates container 26 held by holding section 22 of holding body 20 with the light and detects the light reflected from an outer wall surface of container 26. When container 26 is not held by holding section 22, container detecting unit 62 does not detect the reflected light. On the other hand, when container 26 is held by holding section 22, the light shed on container 26 is reflected, and thus, container detecting unit 62 detects the reflected light, thereby detecting the presence or absence of container 26. Container detecting unit 62 is arranged at a position, in the perpendicular direction, where a region around the upper end of container 26 protruding upwardly from holding body 20 can be irradiated with the light. As a result, container detecting unit 62 can avoid false detection of container 26 caused by detection of the reflected light reflected from holding body 20.

Upstream side holding body detecting unit 54, central holding body detecting unit 52 and downstream side holding body detecting unit 56 as well as holding body position detecting unit 42 and container detecting unit 62 shown in Fig. 3 are not limited to the light sensor and an arbitrary sensor may be selected as appropriate. For example, a magnetic sensor capable of detecting a change in magnetic field may be used as each detecting unit, and magnets may be attached to holding body 20 and container 26 to detect a change in magnetic field when holding body 20 and container 26 come close to the magnetic sensors, thereby detecting holding body 20 and container 26.

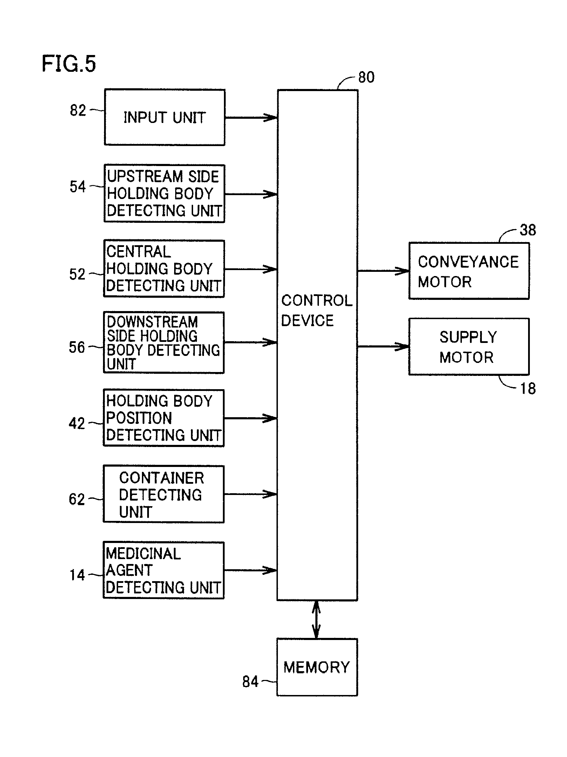

Fig. 5 is a block diagram showing a schematic configuration related to control of medicinal agent filling device 1. Medicinal agent filling device 1 includes a control device 80 for controlling the operation of supply device 10 and conveyance device 30. A result of detection of detected portion 24 by holding body position detecting unit 42, i.e., a signal indicating that holding body position detecting unit 42 has or has not detected detected portion 24, is input to control device 80. A result of detection of holding body 20 by upstream side holding body detecting unit 54, central holding body detecting unit 52 and downstream side holding body detecting unit 56, i.e., a signal indicating which position holding body 20 is located at in conveyance direction DR1, is input to control device 80. A result of detection of container 26 by container detecting unit 62, i.e., a signal indicating that container 26 is or is not held by holding section 22 of holding body 20, is input to control device 80.

Through an input unit 82 such as an input key or a touch panel, the user operating medicinal agent filling device 1 inputs, to control device 80, set values such as the conveyance direction of holding body 20 by conveyance device 30 and the quantity of medicinal agent filled into container 26. Supply device 10 has a medicinal agent detecting unit 14. Medicinal agent detecting unit 14 detects the medicinal agent actually supplied from supply device 10 to container 26. Medicinal agent detecting unit 14 is provided, for example, at the discharge port through which the medicinal agent is discharged from supply device 10, and detects the medicinal agent passing through the discharge port and falling. The information about the medicinal agent supplied from supply device 10 to container 26, which is detected by medicinal agent detecting unit 14, is input to control device 80.

Supply device 10 has a supply motor 18 that is a motive power source for performing the operation for discharging the medicinal agent from supply device 10. Conveyance device 30 has a conveyance motor 38 that is a motive power source for rotating any one of or both pulleys 34 and 36 and moving belt 32. Control device 80 transmits a control signal for controlling the number of rotations of supply motor 18 to supply motor 18, and transmits a control signal for controlling the number of rotations of conveyance motor 38 to conveyance motor 38.

A control program for operating medicinal agent filling device 1 is recorded in a memory 84. The set values input from input unit 82 to control device 80 and the results of detection input from the respective detecting units to control device 80 are also recorded in memory 84. Control device 80 reads data from memory 84 or writes data in memory 84 as needed. Based on the control program and the results of detection by the detecting units, control device 80 controls the operation of supply device 10 and controls the operation of conveyance device 30.

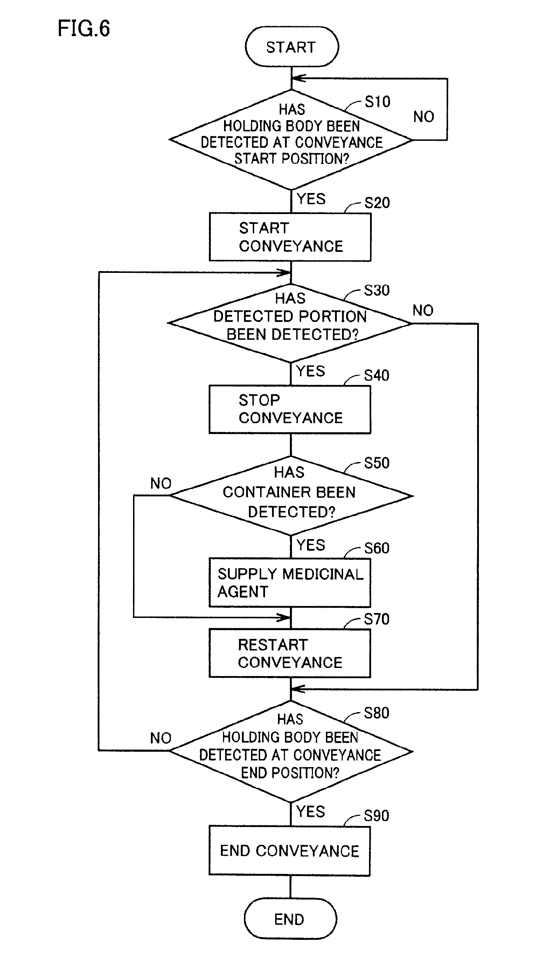

The operation of medicinal agent filling device 1 having the aforementioned configuration will be described below. Fig. 6 is a flowchart showing the operation for supplying the medicinal agent from supply device 10 to container 26. As shown in Fig. 6, in step (S10), it is first determined whether holding body 20 has been detected at the conveyance start position or not. Upstream side holding body detecting unit 54 described above is provided at the conveyance start position, and while light receiving portion 54b is receiving the light generated by light emitting portion 54a of upstream side holding body detecting unit 54, it is determined that holding body 20 is not present at the conveyance start position. Until holding body 20 is detected at the conveyance start position, the determination in step (S10) is repeated.

When light receiving portion 54b no longer receives the light generated by light emitting portion 54a of upstream side holding body detecting unit 54, it is determined that the light is blocked by holding body 20 and holding body 20 is put at the conveyance start position. If holding body 20 is detected at the conveyance start position, the process proceeds to step (S20) and the control signal for driving conveyance motor 38 is sent from control device 80 to conveyance motor 38, so that conveyance of holding body 20 by conveyance device 30 is started. Next, in step (S30), it is determined whether detected portion 24 has been detected or not.

When holding body position detecting unit 42 detects detected portion 24, holding body 20 moves by a prescribed distance afterward, and conveyance device 30 stops at this position and the conveyance of holding body 20 is stopped (step (S40)). Alternatively, control may be executed such that movement of holding body 20 is continued for a prescribed time period from when holding body position detecting unit 42 has detected detected portion 24. When detected portion 24 is detected by holding body position detecting unit 42, control device 80 temporarily stops the conveyance of holding body 20 by conveyance device 30 based on the result of detection.

At this time, assuming that container 26 is held by holding section 22 on the most downstream side in conveyance direction DR1, of the plurality of holding sections 22 (i.e., holding section 22 which is farthest from the conveyance start position and closest to the conveyance end position, and holding section 22a of three holding sections 22 shown in Fig. 2), holding body 20 stops at the position where the medicinal agent can be supplied from supply device 10 to container 26 held by holding section 22a. In this specification, arrangement of holding body 20 that allows the medicinal agent to be supplied from supply device 10 to container 26 held by any one of the plurality of holding sections 22 will be referred to as a supply position L. When holding body 20 is staying at supply position L, container 26 to be held by any one of the plurality of holding sections 22 is present at the position where the medicinal agent can be supplied from supply device 10.

If container 26 is held by corresponding holding section 22 when holding body 20 is staying at supply position L, this container 26 is arranged immediately below hopper 12, and this container 26 can receive the medicinal agent falling from supply device 10 via hopper 12 and the medicinal agent can be supplied to this container 26. It is to be noted that even when holding body 20 is staying at supply position L, container 26 cannot receive the medicinal agent falling from supply device 10 if container 26 is not held by corresponding holding section 22, and thus, the medicinal agent is not supplied from supply device 10 to container 26.

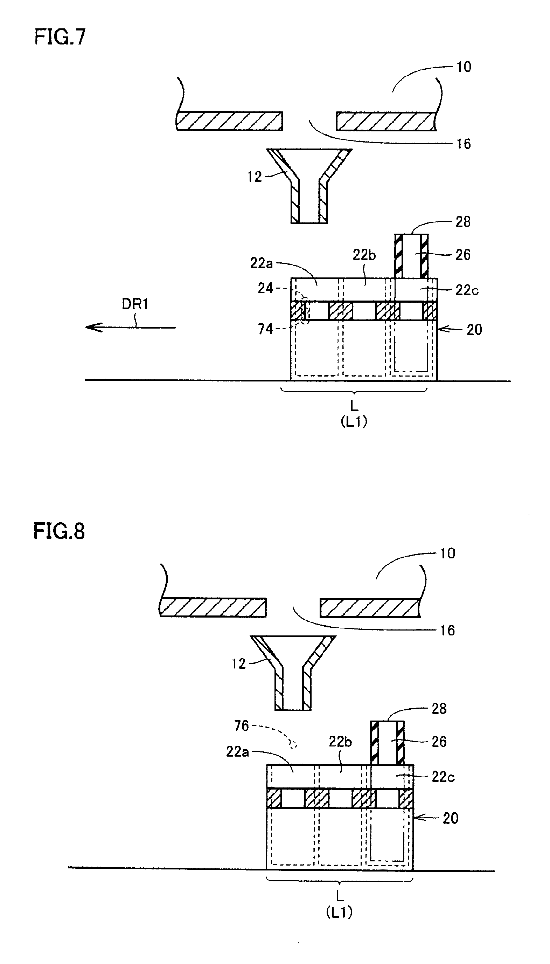

Fig. 7 is a partial cross-sectional view showing a state in which holding body 20 is located on the immediately upstrem side of a first supply position L1. Holding body 20 in the present embodiment described with reference to Fig. 2 has three holding sections 22 and holding sections 22 can hold a total of three containers 26, respectively. Therefore, there are supply positions L corresponding to three containers 26, respectively. Supply position L at which the medicinal agent can be supplied to container 26 to be held by holding section 22a is defined as first supply position L1. Supply position L at which the medicinal agent can be supplied to container 26 to be held by holding section 22b is defined as a second supply position L2. Supply position L at which the medicinal agent can be supplied to container 26 to be held by holding section 22c is defined as a third supply position L3.

Holding body 20 shown in Fig. 7 is located on the immediately upstream side in conveyance direction DR1 with respect to first supply position L1. Holding body 20 is located at a position that is a little distant toward the upstream side in conveyance direction DR1 with respect to first supply position L1. When detection light 74 for detecting the position of holding body 20 is shed from holding body position detecting unit 42 on holding body 20 located on the immediately upstream side of supply position L shown in Fig. 7, detected portion 24 is irradiated with detection light 74.

Holding body position detecting unit 42 receives the reflected light of detection light 74 shed on detected portion 24, thereby detecting that holding body 20 is located immediately before first supply position L1 shown in Fig. 7. Holding body position detecting unit 42 detects detected portion 24, thereby detecting the position of holding body 20 and inputting the result of detection to control device 80. Control device 80, under the result of detection by holding body position detecting unit 42, controls conveyance device 30, reduces the conveyance speed, and stops holding body 20 at first supply position L1.

A distance in conveyance direction DR1 between supply position L and the position of holding body 20 at which detected portion 24 is detected by holding body position detecting unit 42 is a distance enough to cause conveyance device 30 to reliably stop holding body 20 at supply position L under the result of detection by holding body position detecting unit 42. Namely, it is necessary to secure a distance enough to sufficiently decelerate holding body 20 during a time period from when holding body position detecting unit 42 detects detected portion 24 to when holding body 20 reaches supply position L and reliably stop holding body 20 at supply position L.

Next, in step (S50), it is determined whether container 26 has been detected or not. Due to the stop of the conveyance in step (S40), holding body 20 is staying at first supply position L1. At this time, based on the result of detection by container detecting unit 62, it is determined whether container 26 is being held by corresponding holding section 22a or not. When container detecting unit 62 detects container 26, container 26 is present at the position facing hopper 12, and thus, the process subsequently proceeds to step (S60) and the medicinal agent is supplied from supply device 10 to container 26 held by holding section 22a. In step (S60), the control signal is sent from control device 80 shown in Fig. 5 to supply motor 18 to drive supply motor 18, and a prescribed type and quantity of medicinal agent is discharged from supply device 10. When medicinal agent detecting unit 14 (refer to Fig. 5) detects that the prescribed quantity of medicinal agent has been discharged from supply device 10, supply motor 18 stops and the supply of the medicinal agent stops.

Thereafter, the process proceeds to step (S70) and the conveyance of holding body 20 by conveyance device 30 is restarted. If container detecting unit 62 does not detect container 26 in the determination in step (S50), container 26 is not held by holding section 22a, and thus, the medicinal agent is not supplied in step (S60). The process proceeds directly to step (S70) and the conveyance of holding body 20 is restarted.

Fig. 8 is a partial cross-sectional view showing a state in which holding body 20 is located at first supply position L1. Detection light 76 from container detecting unit 62 is shed on a position at which container 26 to be held by holding section 22a protrudes upwardly from holding section 22 when holding body 20 is located at first supply position L1. In this case, container 26 is not held by holding section 22a, and thus, detection light 76 from container detecting unit 62 is not reflected by an outer surface of container 26 and container detecting unit 62 does not detect the reflected light, either. As a result, container detecting unit 62 detects that container 26 is not held by holding section 22a, and inputs the result of detection to control device 80.

Control device 80, under the result of detection by container detecting unit 62, controls supply device 10 not to supply the medicinal agent at first supply position L1. As a result, when holding body 20 is located at first supply position L1, the medicinal agent is not discharged from supply device 10. Therefore, in the flowchart in Fig. 6, the determination of NO is made in step (S50), step (S60) is skipped and the process proceeds from step (S50) directly to step (S70), and the conveyance of holding body 20 is restarted.

After the conveyance of holding body 20 is restarted, it is next determined in step (S80) whether holding body 20 has been detected at the conveyance end position or not. Downstream side holding body detecting unit 56 described above is provided at the conveyance end position, and while light receiving portion 56b is receiving the light generated by light emitting portion 56a of downstream side holding body detecting unit 56, it is determined that holding body 20 is not present at the conveyance end position. If holding body 20 has not yet reached the conveyance end position, the process returns to step (S30) and it is again determined whether detected portion 24 has been detected or not. If holding body position detecting unit 42 has detected the next second detected portion 24, the conveyance of holding body 20 is stopped in step (S40).

At this time, holding body 20 stops at second supply position L2, of supply positions L. Namely, assuming that container 26 is held by the second holding section 22 from the downstream side in conveyance direction DR1, of the plurality of holding sections 22 (i.e., holding section 22b of three holding sections 22 shown in Fig. 2), holding body 20 stops at the position where the medicinal agent can be supplied from supply device 10 to container 26 held by holding section 22b.

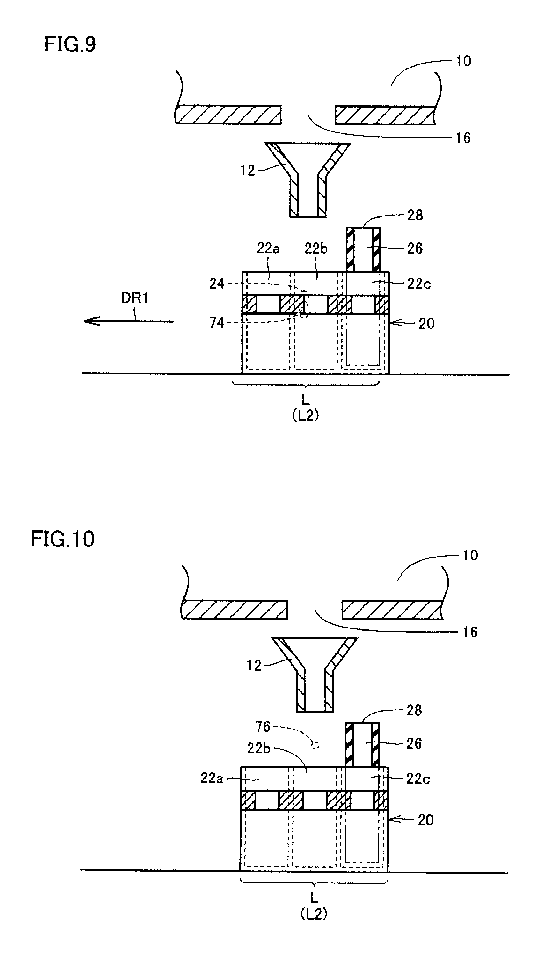

Fig. 9 is a partial cross-sectional view showing a state in which holding body 20 is located on the immediately upstream side of second supply position L2. Holding body 20 shown in Fig. 9 is located on the immediately upstream side in conveyance direction DR1 with respect to second supply position L2. Holding body 20 is located at a position that is a little distant toward the upstream side in conveyance direction DR1 with respect to second supply position L2. When detection light 74 for detecting the position of holding body 20 is shed from holding body position detecting unit 42 on holding body 20 located at the position shown in Fig. 9, the second detected portion 24 is irradiated with detection light 74.

Holding body position detecting unit 42 receives the reflected light of detection light 74 shed on the second detected portion 24, thereby detecting that holding body 20 is located immediately before second supply position L2 shown in Fig. 9. As a result, holding body position detecting unit 42 detects the position of holding body 20, and inputs the result of detection to control device 80. Control device 80, under the result of detection by holding body position detecting unit 42, controls conveyance device 30, reduces the conveyance speed, and stops holding body 20 at second supply position L2.

Subsequently, the detection of container 26 in step (S50) is performed. If container 26 is held by holding section 22b, the supply of the medicinal agent to container 26 held by holding section 22b in step (S60) is performed. When the supply of the medicinal agent is completed, the conveyance of holding body 20 is restarted (step (S70)).

Fig. 10 is a partial cross-sectional view showing a state in which holding body 20 is located at second supply position L2. Detection light 76 from container detecting unit 62 is shed on a position at which container 26 to be held by holding section 22b protrudes upwardly from holding section 22 when holding body 20 is located at second supply position L2. In this case, container 26 is not held by holding section 22b, and thus, detection light 76 from container detecting unit 62 is not reflected by the outer surface of container 26 and container detecting unit 62 does not detect the reflected light, either. As a result, container detecting unit 62 detects that container 26 is not held by holding section 22b, and inputs the result of detection to control device 80.

Control device 80, under the result of detection by container detecting unit 62, controls supply device 10 not to supply the medicinal agent at second supply position L2. As a result, when holding body 20 is located at second supply position L2, the medicinal agent is not discharged from supply device 10. Therefore, in the flowchart in Fig. 6, the determination of NO is made in step (S50), step (S60) is skipped and the process proceeds from step (S50) directly to step (S70), and the conveyance of holding body 20 is restarted.

Subsequently, the determination in step (S80) of whether holding body 20 has been detected at the conveyance end position or not is made again. At this time, holding body 20 has not yet reached the conveyance end position. Therefore, the process returns to step (S30), and if container 26 is held by the third holding section 22 (holding section 22c shown in Fig. 2), the medicinal agent is supplied to container 26 held by holding section 22c, in accordance with the aforementioned steps.

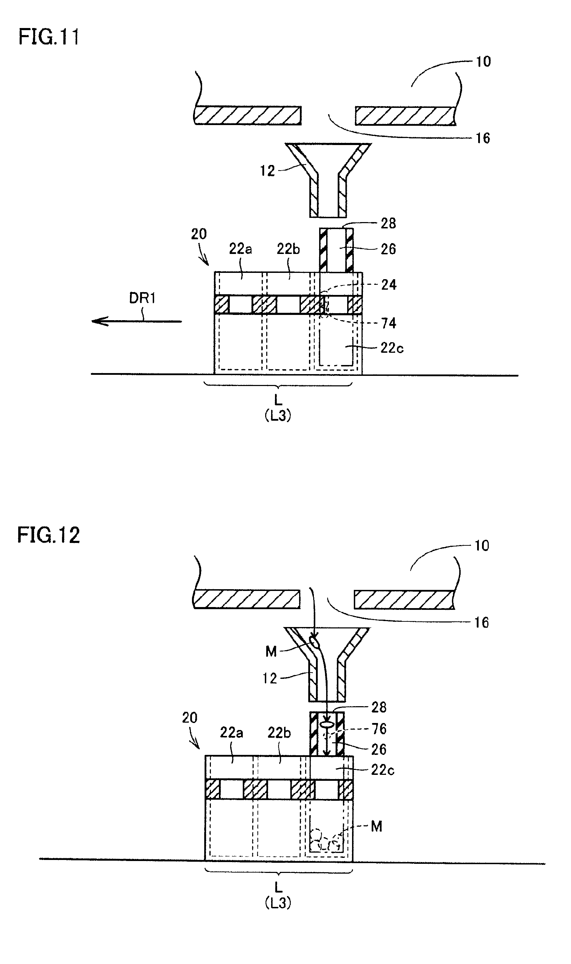

Fig. 11 is a partial cross-sectional view showing a state in which holding body 20 is located on the immediately upstream side of third supply position L3. Holding body 20 shown in Fig. 11 is located on the immediately upstream side in conveyance direction DR1 with respect to third supply position L3. Holding body 20 is located at a position that is a little distant toward the upstream side in conveyance direction DR1 with respect to third supply position L3. When detection light 74 for detecting the position of holding body 20 is shed from holding body position detecting unit 42 on holding body 20 located at the position shown in Fig. 11, the third detected portion 24 is irradiated with detection light 74.

Holding body position detecting unit 42 receives the reflected light of detection light 74 shed on the third detected portion 24, thereby detecting that holding body 20 is located immediately before third supply position L3 shown in Fig. 11. As a result, holding body position detecting unit 42 detects the position of holding body 20, and inputs the result of detection to control device 80. Control device 80, under the result of detection by holding body position detecting unit 42, controls conveyance device 30, reduces the conveyance speed, and stops holding body 20 at third supply position L3.

Fig. 12 is a partial cross-sectional view showing a state in which holding body 20 is located at third supply position L3. Detection light 76 from container detecting unit 62 is shed on a position at which container 26 held by holding section 22c protrudes upwardly from holding section 22 when holding body 20 is located at third supply position L3. In this case, container 26 is held by holding section 22c, and thus, detection light 76 from container detecting unit 62 is reflected by the outer surface of container 26 and container detecting unit 62 detects the reflected light. As a result, container detecting unit 62 detects that container 26 is held by holding section 22c, and inputs the result of detection to control device 80. Therefore, in the flowchart in Fig. 6, the determination of YES is made in step (S50), the process proceeds from step (S50) to step (S60), and the medicinal agent is supplied to container 26.

Control device 80, under the result of detection by container detecting unit 62, controls supply device 10 to supply the medicinal agent at third supply position L3. As a result, when holding body 20 is located at third supply position L3, the control signal for driving supply motor 18 is sent from control device 80 to supply motor 18 and a medicinal agent M is discharged from supply device 10. Medicinal agent M is discharged from supply device 10 through a discharge port 16 formed in supply device 10, and medicinal agent M falling from supply device 10 is received by hopper 12. Medicinal agent M passes through hopper 12 and further falls, and is supplied through an upper opening 28 formed in container 26, into container 26 held by holding section 22c. In this manner, the prescribed type and quantity of medicinal agent M is filled into container 26 held by holding section 22c. When the supply of the medicinal agent to container 26 is completed, the process proceeds to step (S70) and the conveyance of holding body 20 is restarted.

In the third determination in step (S80) immediately after the subsequent restart of the conveyance, holding body 20 has not yet reached the conveyance end position, and thus, the process returns to step (S30) again and it is determined whether detected portion 24 has been detected or not. At this time, holding body 20 has three holding sections 22 and the stop of the conveyance of holding body 20 at three supply positions L corresponding to three holding sections 22 has already been completed, and thus, detected portion 24 is not detected afterward. Therefore, the process proceeds from step (S30) directly to step (S80) and the determination in step (S80) is made again.

Downstream side holding body detecting unit 56 described above is provided at the conveyance end position, and while light receiving portion 56b is receiving the light generated by light emitting portion 56a of downstream side holding body detecting unit 56, it is determined that holding body 20 is not present at the conveyance end position. Until holding body 20 reaches the conveyance end position and holding body 20 is detected at the conveyance end position, the conveyance of holding body 20 is continued. When holding body 20 reaches the conveyance end position and downstream side holding body detecting unit 56 detects holding body 20, the process proceeds to step (S90) and the conveyance of holding body 20 ends. In this manner, the operation of medicinal agent filling device 1 for supplying the medicinal agent from supply device 10 to container 26 is completed.

According to medicinal agent filling device 1 in the present embodiment described above, holding body 20 has the plurality of holding sections 22 and is provided such that each holding section 22 can hold container 26, and conveyance device 30 conveys holding sections 22 capable of holding the plurality of containers 26. Thus, by filling an appropriate type and an appropriate quantity of medicinal agent into one container 26 or each of the plurality of containers 26 held by holding body 20, an optimum unit in terms of the type and/or quantity of medicinal agent can be managed as one unit.

For example, it is possible to fill different types of medicinal agents into a plurality of containers 26 held by one holding body 20, respectively, and put the plurality of types of medicinal agents to be administered to one patient together in one holding body 20. This facilitates matching between a prescription and the medicinal agents before the medicinal agents are handed to the patient. In addition, for example, when a pharmacy or a hospital is replenished with a medicinal agent that is in short supply at the present moment, one or a plurality of holding bodies 20 are allotted to each pharmacy or each hospital, and thereby, matching of the type and the quantity of lacking medicinal agent can be easily performed. As a matter of course, in addition to allotting holding body 20/holding bodies 20 to each hospital, holding body 20/holding bodies 20 may be allotted to each hospital ward or each hospital room to appropriately manage supply of the medicinal agents.

Holding body 20 is conveyed by conveyance device 30 and holding body 20 stops at supply position L. In accordance with the result of detection obtained by detection of detected portion 24 by holding body position detecting unit 42, control device 80 controls conveyance device 30 to stop holding body 20 at supply position L. Therefore, holding body 20 can be stopped reliably at the position where the medicinal agent can be supplied from supply device 10 to container 26, and the medicinal agent can be sequentially supplied to the plurality of containers 26 automatically. Since holding body 20 holding containers 26 capable of being filled with the medicinal agent is conveyed by conveyance device 30 and the medicinal agent can be automatically supplied from supply device 10 to containers 26, the operator's time and effort when the operator fills the medicinal agent to containers 26 can be significantly reduced.

Holding body 20 is provided with the plurality of detected portions 24 corresponding to the plurality of holding sections 22, and detected portion 24 is provided on the downstream side in conveyance direction DR1 with respect to holding section 22. Holding body position detecting unit 42 detects detected portion 24, and thereby, it is reliably detected that holding body 20 is located on the immediately upstream side of supply position L. After detected portion 24 of holding body 20 located on the immediately upstream side of supply position L is detected, holding body 20 moves by the prescribed distance and is stopped at this position, and thereby, the stop position of holding body 20 is set at supply position L. Therefore, whenever holding body 20 reaches the prescribed position on the immediately upstream side of supply position L, holding body 20 can be temporarily stopped at each of the plurality of supply positions L reliably and the medicinal agent can be supplied from supply device 10 to container 26.

Container detecting unit 62 detects that container 26 is held by holding section 22. When it is detected that container 26 is held by holding section 22 of interest, based on the result of detection by container detecting unit 62 when holding body 20 is staying at supply position L, the medicinal agent is supplied to this container 26. When container detecting unit 62 does not detect container 26, the medicinal agent is not supplied from supply device 10. As a result, it is possible to reliably prevent discharge of the medicinal agent from supply device 10 when there is no container 26 that can receive the medicinal agent supplied from supply device 10.

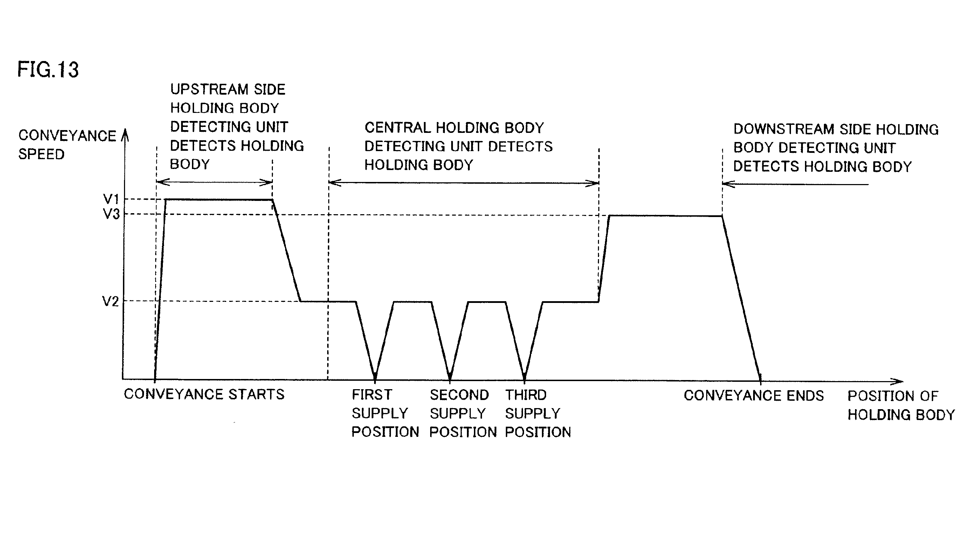

Fig. 13 is a graph showing relation between the position of holding body 20 and the conveyance speed. In the graph shown in Fig. 13, the horizontal axis indicates the position in conveyance direction DR1 of holding body 20 conveyed by conveyance device 30, and the vertical axis indicates the conveyance speed of conveyance device 30 conveying holding body 20. As described above, medicinal agent filling device 1 is provided with upstream side holding body detecting unit 54 for detecting holding body 20 at the conveyance start position located on more upstream side in conveyance direction DR1 than supply position L. When upstream side holding body detecting unit 54 detects holding body 20, control device 80 starts conveyance of holding body 20 by conveyance device 30.

After the start of conveyance, control device 80 sets the conveyance speed of holding body 20 by conveyance device 30 at a first conveyance speed V1. While upstream side holding body detecting unit 54 is detecting the holding body, the conveyance speed of conveyance device 30 is maintained at first conveyance speed V1. When upstream side holding body detecting unit 54 no longer detects holding body 20, control device 80 reduces the conveyance speed of conveyance device 30 to a second conveyance speed V2 that is lower than first conveyance speed V1.

Thus, after the start of conveyance of holding body 20, in a prescribed distance before holding body 20 reaches supply position L, holding body 20 is conveyed at relatively high first conveyance speed V1. Therefore, the time required for conveyance of holding body 20 from the conveyance start position to supply position L can be shortened. When holding body 20 comes close to supply position L, control is executed such that holding body 20 is conveyed at the conveyance speed reduced to second conveyance speed V2. Medicinal agent filling device 1 is provided with central holding body detecting unit 52 capable of detecting holding body 20 when holding body 20 is located at supply position L, and while central holding body detecting unit 52 is detecting holding body 20, control device 80 maintains the set value of the conveyance speed when conveying holding body 20 at second conveyance speed V2. As a result, it becomes easier to reliably stop holding body 20 at supply position L when detected portion 24 is detected.

As shown in Fig. 13, when detected portion 24 is detected, the conveyance of holding body 20 stops. Holding body 20 in the present embodiment has three holding sections 22 and has three detected portions 24 corresponding to holding sections 22. Therefore, holding body 20 temporarily stops at three places, i.e., first supply position L1, second supply position L2 and third supply position L3. The set value of the conveyance speed before deceleration for stopping holding body 20 at supply position L is second conveyance speed V2, and the set value of the conveyance speed after acceleration after the conveyance is restarted from supply position L is second conveyance speed V2, similarly.

When central holding body detecting unit 52 no longer detects holding body 20, control device 80 sets the conveyance speed of conveyance device 30 at a third conveyance speed V3 that is higher than second conveyance speed V2. While holding body 20 is moving from supply position L to the conveyance end position after supply of the medicinal agent to container 26 at supply position L is completed, holding body 20 is conveyed at relatively high third conveyance speed V3. As a result, the time required for conveyance of holding body 20 from supply position L to the conveyance end position can be shortened. As shown in Fig. 13, third conveyance speed V3 may be different from first conveyance speed V1, or may be the same as first conveyance speed V1.

Medicinal agent filling device 1 is provided with downstream side holding body detecting unit 56 for detecting holding body 20 at the conveyance end position located on more downstream side in conveyance direction DR1 than supply position L. When downstream side holding body detecting unit 56 detects holding body 20, control device 80 ends the conveyance of holding body 20 by conveyance device 30 and stops holding body 20. Furthermore, while downstream side holding body detecting unit 56 is detecting holding body 20, control device 80 prohibits the conveyance of holding body 20 by conveyance device 30. If conveyance device 30 inadvertently starts the conveyance of holding body 20 when holding body 20 is located at the conveyance end position, holding body 20 can fall from conveyance device 30. Since restart of the conveyance when holding body 20 is located at the conveyance end position is prohibited, the falling of holding body 20 from conveyance device 30 can be reliably prevented.

In the foregoing description, holding body 20 is provided with three holding sections 22 and holding body 20 can simultaneously hold a maximum of three containers 26. However, the present invention is not limited to this configuration. Holding body 20 may be able to have a larger number of holding sections 22 and simultaneously hold a larger number of containers 26 in accordance with the increase in the number of holding sections 22. A plurality of types of holding bodies 20 having the different number of holding sections 22 may be prepared and holding body 20 may be selectable as appropriate by the user operating medicinal agent filling device 1.

While the embodiment of the present invention has been described above, it should be understood that the embodiment disclosed herein is illustrative and not limitative in any respect. The scope of the present invention is defined by the terms of the claims, rather than the description above, and is intended to include any modifications within the scope and meaning equivalent to the terms of the claims.

### REFERENCE SIGNS LIST

1 medicinal agent filling device; 10 supply device; 18 supply motor; 20 holding body; 22, 22a, 22b, 22c holding section; 24 detected portion; 26 container; 30 conveyance device; 38 conveyance motor; 42 holding body position detecting unit; 52 central holding body detecting unit; 54 upstream side holding body detecting unit; 56 downstream side holding body detecting unit; 62 container detecting unit; 80 control device; DR1 conveyance direction; L supply position; L1 first supply position; L2 second supply position; L3 third supply position; M medicinal agent; V1 first conveyance speed; V2 second conveyance speed; V3 third conveyance speed.

## Claims

1. A medicinal agent filling device (1), comprising:
a supply device (10) for supplying a medicinal agent (M) of interest to a container (26) capable of being filled with said medicinal agent (M);
a holding body (20) having a plurality of holding sections (22), each of which can hold said container (26);
a conveyance device (30) for conveying said holding body (20) and moving said holding body (20) to a supply position (L) at which said medicinal agent (M) can be supplied from said supply device (10) to said container (26) held by any one of said plurality of holding sections (22); and
a detecting unit (42) for detecting said holding body (20) located on an immediately upstream side of said supply position (L).

2. The medicinal agent filling device (1) according to claim 1, wherein
said holding body (20) has a plurality of detected portions (24) corresponding to said plurality of holding sections (22), respectively, and
said detecting unit (42) detects said detected portion (24) of said holding section (20) located on the immediately upstream side of said supply position (L).

3. The medicinal agent filling device (1) according to claim 1 or 2, comprising
a container detecting unit (62) for detecting that said container (26) is held by said holding section (22).

4. The medicinal agent filling device (1) according to claim 1 or 2, comprising
a control unit (80) for controlling said supply device (10) and said conveyance device (30), wherein
said control unit (80) receives a result of detection by said detecting unit (42) indicating that said holding body (20) is located on the immediately upstream side of said supply position (L), and controls said conveyance device (30) to stop said holding body (20) at said supply position (L).

5. The medicinal agent filling device (1) according to claim 4, comprising
a container detecting unit (62) for detecting that said container (26) is held by said holding section (22), wherein
when said holding body (20) is staying at said supply position (L), said control unit (80) receives a result of detection by said container detecting unit (62) indicating that said container (26) is held by said holding section (22), and controls said supply device (10) to supply said medicinal agent (M) from said supply device (10) to said container (26).

6. The medicinal agent filling device (1) according to claim 5, wherein
when supply of said medicinal agent (M) from said supply device (10) to said container (26) is completed, said control unit (80) restarts conveyance of said holding body (20) by said conveyance device (30).

7. The medicinal agent filling device (1) according to any one of claims 1 to 6, wherein
said conveyance device (30) has a belt (32), and said holding body (20) is placed on said belt (32) and conveyed.
